Europäisches Patentamt

European Patent Office

Office européen des brevets

(11) Veröffentlichungsnummer: **0 520 349 A1**

## (12) EUROPÄISCHE PATENTANMELDUNG

(21) Anmeldenummer: **92110455.0**

(22) Anmeldetag: **20.06.92**

(51) Int. Cl.5: **B65G 1/10, B65G 1/04**

(30) Priorität: **27.06.91 DE 4121243**

(43) Veröffentlichungstag der Anmeldung:
**30.12.92 Patentblatt 92/53**

(84) Benannte Vertragsstaaten:
**AT BE CH DK FR GB IT LI NL**

(71) Anmelder: **Wiemeyer, Angelika**
**Im Sande 6**
**W-4531 Lotte-Halen(DE)**

(72) Erfinder: **Wiemeyer, Angelika**
**Im Sande 6**
**W-4531 Lotte-Halen(DE)**

(74) Vertreter: **Busse & Busse Patentanwälte**
**Postfach 1226 Grosshandelsring 6**
**W-4500 Osnabrück(DE)**

(54) **Grossregal für plattenartige Elemente.**

(57) Großregal für plattenartige Elemente, wie Glasplatten, Kunststoffplaten etc. mit einem Grundrahmen, welcher einen U-förmigen Unterrahmen und zumindest einen oderen Längsträger aufweist, die mittels aufrechter Stützen miteinander verbunden sind, wobei der U-förmige Unterrahmen einen Längsbalken und zwei äußere seitliche beabstandete Querbalken aufweist, und wobei an dem Grundrahmen mittels Schwenklager mehrere um aufrechte Achsen verschwenkbare Regalschwingen angeordnet sind. Um das Großregal platzsparender zu gestalten, ist vorgesehen, daß die vorderen Enden der äußeren Querbalken (22,39) des Unterrahmens (19,36) in Richtung der Schwenklager (31,45) der Regalschwingen (32,46) gegenüber den Vorderseiten (34,47) der Regalschwingen (32,46) zurückgezogen angeordnet sind, und zwar derart, daß die äußeren vorderen Enden der äußeren seitlichen Querbalken (22,39) sich innerhalb des von den Regalschwingen (32,46) bei äußerer seitlicher Ausschwingung begrenzten Bereiches (A) angeordnet sind.

FIG. 3

EP 0 520 349 A1

Die Erfindung betrifft ein Großregal für plattenartige Elemente gemäß des Oberbegriffes des Patentanspruches 1.

Ein derartiges Großregal ist durch die DE-OS 39 34 697 bekannt. Dieses Großregal weist einen Grundrahmen auf, welcher ein U-förmigen Unterrahmen und zumindest einen oberen Längsträger aufweist, die mittels aufrechter Stützen miteinander verbunden sind. Der U-förmige Unterrahmen weist einen Längsbalken und zwei äußere seitlich und zueinander beanstandete Querbalken auf. Auf den vorderen äußeren Enden der äußeren Querbalken sind die aufrechten Stützen angeordnet. An dem Grundrahmen sind mittels Schwenklager mehrere um aufrechte Achsen verschwenkbare Regalschwingen angeordnet. Die äußeren seitlichen Querbalken sowie die aufrechten Stützen sind außerhalb des Schwenkbereiches der Regalschwingen neben den Regalschwingen angeordnet. Das Regal ist um die Breite der aufrechten Stützen bzw. um die Breite der Querbalkenbreite breiter als der durch den Schwenkbereich der Regalschwingen beanspruchte Bereich.

Der Erfindung liegt die Aufgabe zugrunde, das Großregal platzsparender zu gestalten.

Diese Aufgabe wird erfindungsgemäß durch die kennzeichnenden Merkmale des Anspruches 1 gelöst.

Infolge dieser Maßnahmen wird auf einfachste Weise ein äußerst kompaktes Großregal geschaffen, welches im Vergleich zu den bekannten Großregalen auf dem gleichen Platz bis zu fünf zusätzliche Regalschwingen aufnehmen kann oder bei gleicher Anzahl von Regalschwingen wird für das Aufstellen des Großregals um bis zu 15 % weniger Platz benötigt. Es findet also eine erhebliche Platzreduzierung für das Großregal bei gleichzeitiger kostengünstiger Ausgestaltung statt, so daß eine erhebliche Reduzierung der Baugröße bei gleichem Fassungsvermögen des Großregals erreicht wird. Darüberhinaus wird eine wesentliche Reduzierung der Herstellungskosten für das Großregal erreicht, weil sowohl der Längsbalken wie auch die seitlichen Querbalken wesentliche kürzer ausgeführt werden können, wobei jedoch noch eine ausreichende Standsicherheit für das Großregal erhalten wird. Hierbei wirkt sich vorteilhaft aus, daß die äußeren, vorderen seitlichen Stützen sich ebenfalls innerhalb des von den Regalschwingen, bei deren äußerster seitlicher Ausschwingung, begrenzten Bereiches angeordnet sind. Somit befinden sich nicht nur die äußeren seitlichen Querbalken, sondern auch die seitlichen Stützen innerhalb des notwendigen Bereiches, der von den Regalschwingen durch ihre Ausschwenkbewegung beansprucht wird. Außerhalb dieses seitlichen Bereiches, der von den Regalschwingen überschwenkt wird, befinden sich keine Teile. Somit ist es also möglich, wenn mehrere Großregale nebeneinander angeordnet sind, daß der zur Verfügung stehende Raum optimal für die Regalschwingen, ohne daß sich "toter" Raum zwischen den äußeren benachbarten Schwingen benachbarter Großregale befindet, ausgenutzt wird.

Um eine ausreichende Standsicherheit des Großregals zu erreichen, befinden sich die vorderen Enden der unteren seitlichen Querbalken von dem Schwenklager aus gesehen, um zumindest 10 cm hinter der halben Länge der Regalschwingen. Eine weitere Erhöhung der Standsicherheit des Großregals, selbst bei ungünstiger Beladung des Großregals ergibt sich dadurch, daß vor dem vorderen Ende der äußeren Querbalken zusätzliche Stützelemente an den Querbalken angeordnet sind. Ein vorteilhafte Anordnung der aufrechten Stützen ergibt sich dadurch, daß die aufrechten Stützen gegenüber den vorderen Enden der äußeren Querbalken oder den vorderen Enden der Stützelemente um zumindest 10 cm zurückgezogen angeordnet sind.

Weitere Einzelheiten der Erfindung sind der Beispielsbeschreibung und den Zeichnungen zu entnehmen. Hierbei zeigen

Fig. 1    das Großregal nach dem Stand der Technik in der Draufsicht und in Prinzipdarstellung,

Fig. 2    das Großregal gemäß Fig. 1 in der Seitenansicht,

Fig. 3    das erfindungsgemäße Großregal in der Draufsicht und in Prinzipdarstellung,

Fig. 4    das Großregal gemäß Fig. 3 in der Seitenansicht,

Fig. 5    die Anordnung der äußeren Stützen und des Querbalkens und der äußersten Regalschwinge in der Draufsicht und in vergrößertem Maßstab,

Fig. 6    ein weiteres erfindungsgemäßes Großregal in der Draufsicht und in Prinzipdarstellung und

Fig. 7    das Großregel gemäß Fig. 6 in der Seitenansicht und in Prinzipdarstellung.

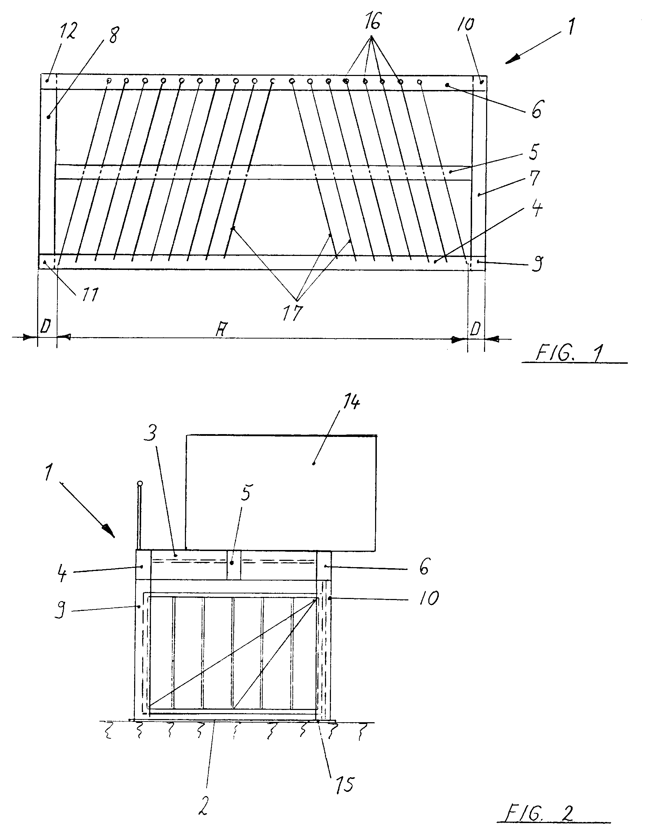

Das Großregal gemäß Fig. 1 weist den Grundrahmen 1 auf. Der Grundrahmen 1 besteht aus dem unteren U-förmigen Unterrahmen 2 und dem Oberrahmen 3 mit drei Längsträgern 4,5 und 6 und den zwei Querträgern 7 und 8. Der Unterrahmen 2 und der Oberrahmen 3 sind durch die aufrechten Stützen 9,10,11 und 12 miteinander verbunden. Auf der Oberseite des Grundrahmens 1 befindet sich die begehbare Lagerplattform 13 zur Vorratshaltung von plattenartigen Elementen in Kiste 14.

An dem oberen hinteren Längsträger 6 und dem unteren Längsträger 15 des Unterrahmens 2 sind die Gelenke 16 zur gelenkigen Anordnung der Regalschwingen 17 angebracht. Diese Regalschwingen 17 sind die plattenaufnehmenden Regalelemente. Die durch die Gelenke 16 verlaufenden Gelenkachsen verlaufen aufrecht, in dem gezeigten Ausführungsbeispiel senkrecht.

Durch diese verschwenkbare Anordnung der Regalschwingen 17 an dem Grundelement 1 sind die Regalschwingen 17 ähnlich wie bei einem stehenden Buch die Buchseiten umlegbar, wie dieses die Fig. 1 zeigt.

Die unteren und oberen Querträger 7,8 sowie die aufrechten Stützen 9,10,11,12 befinden sich bei dem Ausführungsbeispiel gemäß Fig. 1, welches dem Stand der Technik nach der DE-OS 39 34 967 entspricht, außerhalb des von den Regalschwingen 17 bei äußerster seitlicher Ausschwingung, wie sie in Fig. 1 jeweils dargestellt ist, beanspruchten Bereiches, der durch das Maß A gekennzeichnet ist.

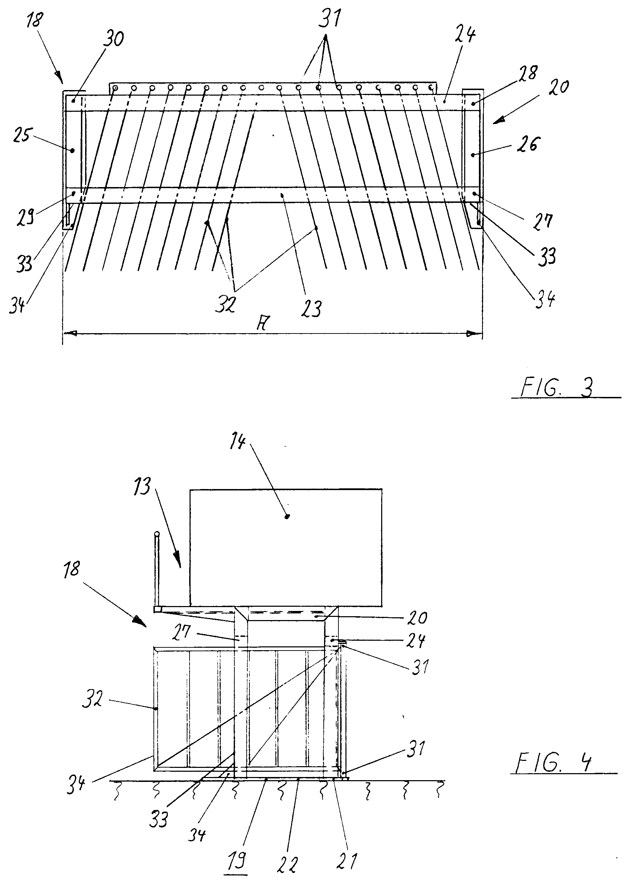

Das Großregal nach dem Ausführungsbeispiel gemäß den Fig. 3 und 4 entspricht der erfindungsgemäßen Ausführung. Dieses Großregal weist den Grundrahmen 18 auf. Dieser Grundrahmen 18 besitzt eine U-förmigen Unterrahmen 19 und einen Oberrahmen 20. Der Unterrahmen 19 besteht aus dem unteren Längsträger 21 und den beiden seitlichen äußeren Querbalken 22. Der Oberrahmen 20 besteht aus den beiden Längsträgern 23 und 24 und den beiden seitlichen Querträgern 25 und 26. Der Unterrahmen 19 und der Oberrahmen 20 sind über die aufrechten Stützen 27,28,29 und 30 miteinander verbunden. An dem unteren Längsträger 21 und dem oberen hinteren Längsträger 24 des Grundrahmens 18 sind mittels der Schwenklager 31 die um aufrechte Achsen verschwenkbaren Regalschwingen 32, welche die plattenartigen Elemente aufnehmen, angeordnet.

Die äußeren Enden 23 der Längsträger 21,23,24 sowie die äußeren Querbalken 22 des Unterrahmens 19 sowie die Querträger 25,26 des Oberrahmens 20 sowie die aufrechten seitlichen Stützen 27,28,29,30 befinden sich innerhalb des von den Regalschwingen 32 bei äußerster seitlicher Ausschwingung begrenzten Bereiches, der durch das Maß A gekennzeichnet ist. Die vorderen Enden 33 der äußeren unteren Querbalken 22 des Unterrahmnens 19 sowie die vorderen Enden 33 der oberen Querbalken 25 und 26 sind in Richtung der Schwenklager 31 der Regalschwingen 32 gegenüber den Vorderseiten 34 der Regalschwingen 32 zurückgezogen angeordnet, und zwar derart, daß die äußeren vorderen Enden 33 der äußeren seitlichen Querbalken 22,25 und 26 sich innerhalb des von den Regalschwingen bei äußerer seitlicher Ausschwingung begrenzten Bereiches A angeordnet sind.

Die vorderen Enden 33 der unteren seitlichen Querbalken 22 befinden sich von dem Schwenklager 31 aus gesehen um zumindest 10 cm hinter der halben Länge B der Länge c Regalschwingen 32.

Vor den vorderen Enden 33 der äußeren Querbalken 22 sind die zusätzlichen Stützelement 34 an dem Querbalken 22 angeordnet, um eine große Standsicherheit zu erreichen. Die aufrechten Stützen 27 und 29 sind gegenüber den vorderen Enden des Stützelementes 34 um zumindest 10 cm zurückgezogen angeordnet.

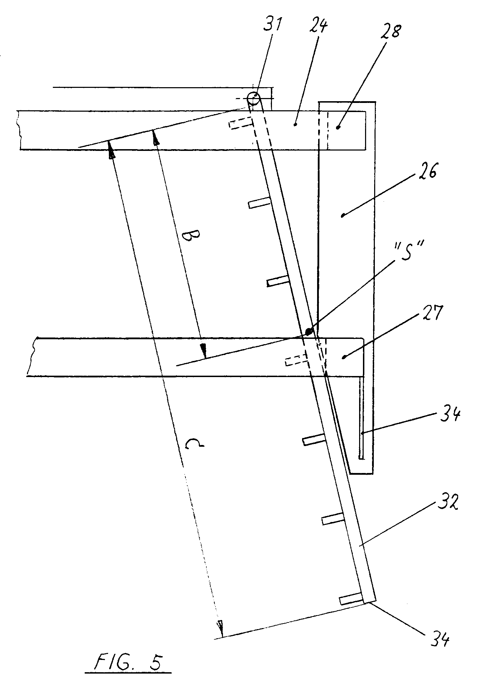

Man erkennt sofort, daß das Großregal gemäß den Fig. 3 bis 5 bei gleicher Anzahl der Regalschwingen um das Doppelte des Maßes D schmaler baut als das Großregal gemäß den Fig. 1 und 2.

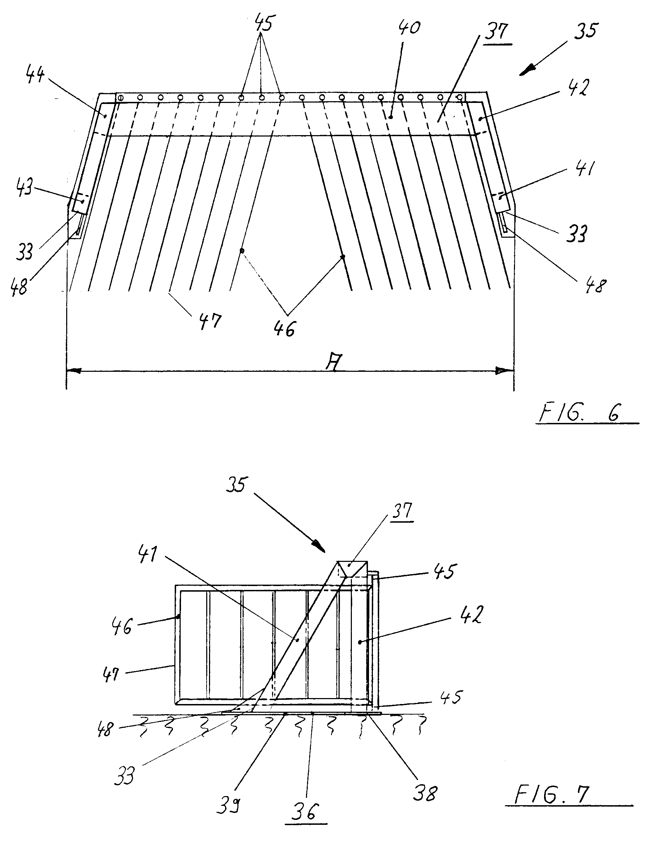

Das Ausführungsbeispiel gemäß den Fig. 6 und 7 zeigt ein weiteres erfindungsgemäßes Großregal. Dieses Großregal weist den Grundrahmen 35 auf. Dieser Grundrahmen 35 besitzt eine U-förmigen Unterrahmen 36 und einen Oberrahmen 37. Der Unterrahmen 36 besteht aus dem unteren Längsträger 38 und den beiden seitlichen äußeren Querbalken 39. Der Oberrahmen 37 besteht aus dem Längsträger 40. Der Unterrahmen 36 und der Oberrahmen 37 sind über die aufrechten Stützen 41,42,43 und 44 miteinander verbunden. An dem unteren Längsträger 38 und dem oberen Längsträger 40 des Grundrahmens 35 sind mittels der Schwenklager 45 die um aufrechte Achsen verschwenkbaren Regalschwingen 46, welche die plattenartigen Elemente aufnehmen, angeordnet.

Die äußeren Enden der Längsträger 38 und 40 sowie die äußeren Querbalken 39 des Unterrahmens 36 sowie die aufrechten seitlichen Stützen 41,42,43,44 befinden sich innerhalb des von den Regalschwingen 46 bei äußerster seitlicher Ausschwingung begrenzten Bereiches, der durch das Maß A bezeichnet ist. Die vorderen Enden 33 der äußeren unteren Querbalken 39 des Unterrahmnens 36 sind in Richtung der Schwenklager 45 der Regalschwingen 46 gegenüber den Vorderseiten 47 der Regalschwingen 46 zurückgezogen angeordnet, und zwar derart, daß die äußeren vorderen Enden 33 der äußeren seitlichen Querbalken 39 sich innerhalb des von den Regalschwingen bei äußerer seitlicher Ausschwingung beanspruchten Bereiches A angeordnet sind.

Vor den vorderen Enden 33 der äußeren Querbalken 39 sind die zusätzlichen Stützelemente 48 an dem Querbalken 39 angeordnet, um eine große Standsicherheit zu erreichen. Die aufrechten Stützen 41 sind gegenüber den vorderen Enden der Stützelemente 41 um 10 cm zurückgezogen angeordnet.

## Patentansprüche

1. Großregal für plattenartige Elemente, wie Glasplatten, Kunststoffplaten etc. mit einem Grundrahmen, welcher einen U-förmigen Unterrahmen und zumindest einen oderen Längsträger aufweist, die mittels aufrechter Stützen miteinander verbunden sind, wobei der U-förmige Unterrahmen einen Längsbalken und zwei äußere seitliche beabstandete Querbalken aufweist, und wobei an dem Grundrahmen mittels Schwenklager mehrere um aufrechte Achsen verschwenkbare Regalschwingen angeordnet sind, dadurch gekennzeichnet, daß die vorderen Enden der äußeren Querbalken (22,39) des Unterrahmens (19,36) in Richtung der Schwenklager (31,45) der Regalschwingen (32,46) gegenüber den Vorderseiten (34,47) der Regalschwingen (32,46) zurückgezogen angeordnet sind, und zwar derart, daß die äußeren vorderen Enden der äußeren seitlichen Querbalken (22,39) sich innerhalb des von den Regalschwingen (32,46) bei äußerer seitlicher Ausschwingung begrenzten Bereiches (A) angeordnet sind.

2. Großregal nach Anspruch 1, dadurch gekennzeichnet, daß die äußeren vorderen seitlichen Stützen (27,29,41,43) sich ebenfalls innerhalb des von den Regalschwingen (32,46) bei äußerster seitlicher Ausschwingung begrenzten Bereiches (A) angeordnet sind.

3. Großregal nach Anspruch 1, dadurch gekennzeichnet, daß die vorderen Enden der unteren seitlichen Querbalken (22,39) sich von dem Schwenklager aus gesehen, um zumindest um 10 cm hinter der halben Länge der Regalschwingen (32,46) sich befindet.

4. Großregal nach Anspruch 3, dadurch gekennzeichnet, daß vor den vorderen Enden der äußere Querbalken (22,39) Stützelemente (34,48) an dem Querbalken angeordnet sind.

5. Großregal nach Anspruch 1 oder 4, dadurch gekennzeichnet, daß die aufrechten Stützen (27,29,41,43) gegenüber den vorderen Enden der äußeren Querbalken (22,39) oder der vorderen Enden der Stützelemente (34,48) um mindestens 10 cm zurückgezogen angeordnet sind.

FIG. 1

FIG. 2

FIG. 3

FIG. 4

6

FIG. 5

FIG. 6

FIG. 7

EUROPÄISCHER RECHERCHENBERICHT

Europäisches Patentamt

Nummer der Anmeldung

## EINSCHLÄGIGE DOKUMENTE

EP 92110455.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - A - 2 201 955 (CONTINAL GUMMI-WERKE AG) * Seite 1, Absatz 2; Fig. 1 * ---- | 1 | B 65 G 1/10 B 65 G 1/04 |

RECHERCHIERTE SACHGEBIETE (Int. Cl.⁵)

B 65 G

Der vorliegende Recherchenbericht wurde für alle Patentansprüche erstellt.

| Recherchenort | Abschlußdatum der Recherche | Prüfer |
|---|---|---|
| WIEN | 25-08-1992 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82